(19) Europäisches Patentamt
European Patent Office
Office européen des brevets

(11) **EP 4 068 196 A1**

(12) **EUROPEAN PATENT APPLICATION**

(43) Date of publication:
**05.10.2022 Bulletin 2022/40**

(21) Application number: **21166005.5**

(22) Date of filing: **30.03.2021**

(51) International Patent Classification (IPC):
***G06T 5/00*** *(2006.01)*

(52) Cooperative Patent Classification (CPC):
**G06T 5/008;** G06T 2207/10024; G06T 2207/20021;
G06T 2207/20208

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **FINNILÄ, Tapio
33720 TAMPERE (FI)**

• **BIRINCI, Murat
33720 TAMPERE (FI)**
• **KYRÖNLAHTI, Petteri
33720 TAMPERE (FI)**
• **TUNA, Uygar
33720 TAMPERE (FI)**
• **KARAOGLU, Ali
33720 TAMPERE (FI)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **HIGH DYNAMIC RANGE TONE MAPPING**

(57)     Method and device for image processing, in particular for tone mapping, wherein the method comprising the steps of: Acquiring an initial image $I$; Providing a set of m predetermined tone-mapping functions; Selecting a pixel $I(i)$ of the initial image; Determining a pixel weight $w(i)$ for the selected pixel $I(i)$ based on pixel information of at least the selected pixel; Determining for each tone-mapping function a tone-mapping function weight based on the pixel weight; Applying each tone-mapping function to the selected pixel $I(i)$ and weighting the result with the respective tone-mapping function weight; Determining the sum of the weighted result as final pixel $I'(i)$.

Fig.1

| | |
|---|---|
| Acquiring an initial image I; | S01 |
| Providing a set of m predetermined tone-mapping functions; | S02 |
| Selecting a pixel I(i) of the initial image; | S03 |
| Determining a pixel weight w(i) for the selected pixel I(i) based on pixel information of at least the selected pixel; | S04 |
| Determining for each tone-mapping function a tone-mapping function weight based on the pixel weight; and | S05 |
| Applying each tone-mapping function to the pixel I(i) and weight the result with the respective tone-mapping function weight | S06 |
| Determining the sum of the weighted result as final pixel I' (i) | S07 |

EP 4 068 196 A1

**Description**

The present invention relates to a method for image processing, in particular tone-mapping, a device implementing the method for image processing and a software.

Photography has become more and more popular. Simultaneously, the demands on the quality of the images are increasing. Therein, information captured with a camera chip, such as a CMOS or the like, is further processed in order to acquire the final image. One important step of this processing is tone-mapping.

Tone-mapping is the process of mapping the image pixels representing relatively higher dynamic range to a viewing environment (i.e. displaying media) with relatively lower dynamic range. While doing this, tone-mapping process is responsible to provide images to be represented as close as possible to the realworld scene. Tone-mapping includes both brightness and contrast enhancement sub-algorithms to generate subjectively pleasing images. Tone-mapping algorithms can be targeted for a sole algorithm (e.g. as a post-processing algorithm) or can be implemented as a part of the image processing pipeline also known as Image Signal Processor (ISP) pipeline. The ISP may be implemented in software, firmware, hardware or in a dedicated processor. The ISP can also be implemented in simulation environment which may be used to develop the algorithms for the algorithms being developed for end-user devices.

Common global and local tone-mapping algorithms rely on the decomposition of the image into multiple-layers and enhancement of each layer independently before collapsing them back into the image. Laplacian pyramid based local tone-mapping algorithm (TM) is one of this kind of algorithms which is regarded as the state-of-the-art algorithm such as known from S. Paris, S. W. Hasinoff, J. Kautz, Local Laplacian Filters: "Edge-aware Image Processing with a Laplacian Pyramid". These multi-scale image-based tone-mapping algorithms are not favourable in the industry because of the high line-buffer cost (i.e. large footprint in the hardware) or memory costs for offline processing. Therefore, instead of multi-layer decomposition-based tone-mapping algorithms, in the industry, grid-based local tone-mapping algorithms are used. Therein, the image is mapped onto a grid wherein each node of the grid provides a parameter of a certain area of the image. However, the grid-based tone-mapping algorithms suffer from the large number of parameters required for the algorithm. This increases the bandwidth cost, which is not favoured in the real time applications. A further drawback of the grid-based solutions is that, depending on the interpolation algorithm used, they might produce halos in the high contrast edges. These halos may be avoided if more advanced interpolation methods are used. However, advanced interpolation methods require additional line buffers, thus increasing the hardware implementation cost.

Thus, it is an object of the present invention to overcome the drawbacks of the prior art. Further, it is an object of the present invention to provide an improved tone-mapping, decreasing the hardware requirements and improving the band width.

According to the present invention the problem is solved by a method for image processing according to claim 1, a device according to claim 11 and a software according to claim 12.

In an aspect of the present invention a method for image processing is provided, in particular a tone-mapping, comprising the steps of:

a) Acquiring an initial image $I$;
b) Providing a set of m predetermined tone-mapping functions;
c) Selecting a pixel $I(i)$ of the initial image;
d) Determining a pixel weight $w(i)$ for the selected pixel $I(i)$ based on pixel information of at least the selected pixel;
e) Determining for each tone-mapping function a tone-mapping function weight based on the pixel weight $w(i)$; and
f) Applying each tone-mapping function to the selected pixel $I(i)$ and weighting the result with the respective tone-mapping function weight;
g) Determining the sum of the weighted result as final pixel $I'(i)$.

In step a) an initial image $I$ is acquired preferably by an image sensor from a camera device such as a mobile terminal or the like. The initial image comprises pixels having the pixel index $i$.

In step b) a set of m predetermined tone-mapping functions is provided wherein preferably m is equal to or larger than two. Therein, the tone-mapping functions provide in general a mapping function mapping the pixel information of the pixel of a high dynamic range to a lower dynamic range capable for displaying, for example, by a display device having a lower dynamic range. Therein, the tone-mapping function might be implemented by hardware, software, or firmware.

In step c) a pixel $I(i)$ is selected from the initial image and according to step d) a pixel weight $w(i)$ for the selected pixel $I(i)$ based on pixel information of at least the selected pixel is determined. Therein, the pixel information of the selected pixel can be directly used in order to determine the respective pixel weight. Alternatively, the pixel information is combined, as described in more detail below, with further information, preferably of the initial image, in order to calculate the respective pixel weight, thus being used indirectly for determining the pixel weight. According to step e), for each tone-mapping function of the set of predetermined tone-mapping functions a tone-mapping function weight is determined based on the pixel weight $w(i)$ of the selected pixel $I(i)$. In step f) each tone-mapping function from the set of predetermined tone-mapping functions is applied to the selected pixel $I(i)$, wherein the respective result is weighted with the respective tone-mapping function weight. Thus, m different tone-mapped pixels are determined, each weighted by the m tone-mapping function weights determined before. In the last step g), the sum of the weighted result is determined as the final pixel $I'(i)$. Thus, the weighted sum over the m tone-mapped initial pixels being weighted with the respective tone-mapping function weight is used as final pixel $I'(i)$.

Hence, in accordance with the present invention, a set of a certain number of predetermined tone-mapping functions are used. It is not necessary to specifically implement or tune the respective tone-mapping functions individually for each pixel or a group of pixels. Thus, the number of parameters necessary for applying the tone-mapping is reduced, improving the required bandwidth without loss of image quality or degradation of the appearance of the final image.

Preferably, the steps c) to g) are repeated in particular for each pixel of the initial image in order to form the final image. Thus, proper tone-mapping for each of the pixels of the initial image is provided.

Preferably, the tone-mapping functions are implemented as look-up table (LUT). Therein, by the LUTs brightness and/or contrast adjustments are provided.

Preferably, the pixel weight $w(i)$ is determined based on pixel information of the selected pixel $I(i)$. Therein, the pixel information includes colour information and/or luminance. In particular, if the Lab colour space (often also denoted as L*a*b* colour space) is used, pixel information may relate to one of the L-channel, a-channel or b-channel or a combination thereof. More preferably, the pixel weight is determined based on pixel information of the selected pixel and a plurality of adjacent pixels being adjacent or being in the same region as the selected pixel. Preferably, the adjacent pixels are arranged in a square surrounding the selected pixel or the like. For example, the pixel weight is determined based on a weight grid, wherein for each node of the weight grid a pixel weight is provided or to each node a node value is assigned used for calculating the pixel weight. Each pixel in the initial image $I$ is assigned to a respective grid node. Therein, the weight grid is determined by interpolation of the pixels assigned to or represented by the respective grid node, by averaging the pixel information, by filtering, or by any other way to approximate the pixel information of the pixels assigned to the respective node.

Preferably, the pixel weight is calculated by interpolation based on the pixel location provided by the pixel index $i$ and the values of the neighbouring nodes, i.e. the respective node values, and/or pixel information of adjacent pixels. This interpolation can be done in various ways such as by using a bilinear, bicubic or even more advanced interpolation algorithms such as bilateral interpolation algorithms. Depending on the employed interpolation method, additional information may be used to support the pixel weight grid interpolation. For instance, for Joint bilateral interpolation, a downscaled (i.e. low-resolution) representation of the input image might be used for better guidance during the interpolation.

Preferably, the pixel weight is based on the luminance as pixel information.

Preferably, each tone-mapping function is associated with an indication value providing association information between the tone-mapping function and the respective pixel weight.

Preferably, the indication value is a luminance value.

Preferably, the indication value is distributed between a minimum indication value and maximum indication value wherein the minimum indication value might be selected according to one of:

- a minimum luminance value of the initial image;
- an absolute luminance minimum usually being indicated by the value 0; or
- or a preset minimum luminance value set by the user.

Alternatively or additionally, the maximum indication value is selected according to one of:

- a maximum luminance value of the initial image;
- an absolute maximum luminance value usually being indicated by the value 1;
- a preset maximum luminance value set by a user in advance or during performing the steps of the present method.

Therein, all of the above-mentioned options for the minimum indication value can be freely combined with all options for the maximum indication value.

Preferably, the tone-mapping functions associated with the respective indication value are equally distributed between the minimum indication value and the maximum indication value.

Preferably, the tone-mapping function weight is calculated on the basis of the difference between the indication value and the pixel weight.

Preferably, the tone-mapping function weights $w_k$, $k = 1,...,m$, are calculated according to

$$w_k(i) = \frac{\sum_{k=1:m}(w(i) - a_k)^2}{(w(i) - a_k)^2}.$$

Therein, $w(i)$ denotes the pixel weight and $a_k$ denotes the indication value for the respective tone-mapping function.

Preferably, the tone-mapping function weights are normalized, in particular by

$$w_k(i) = \frac{w_k(i)}{\sum_{k=1:m} w_k(i)}$$

in order to make sure that the tone-mapping function weights are between [0,1].

In a further aspect of the present invention a device is provided comprising an image sensor and a processor, wherein the processor is configured to perform the steps of the method described before. In particular, the processor is connected with a memory storage storing the predetermined tone-mapping functions.

In a further aspect, a software is provided including instructions when executed by a computing device performing the steps of the method described before.

The invention is further described with reference to the accompanying figures.

The figures show:

Figure 1 flow diagram of the method according to the present invention,

Figure 2A an example of a weight grid,

Figure 2B an example of a set of predetermined tone-mapping functions,

Figure 3 a diagram for calculating the tone-mapping function weights according to the present invention,

Figure 4 a diagram for calculating a final pixel,

Figure 5 a comparison of the present invention and

Figure 6 a device according to the present invention.

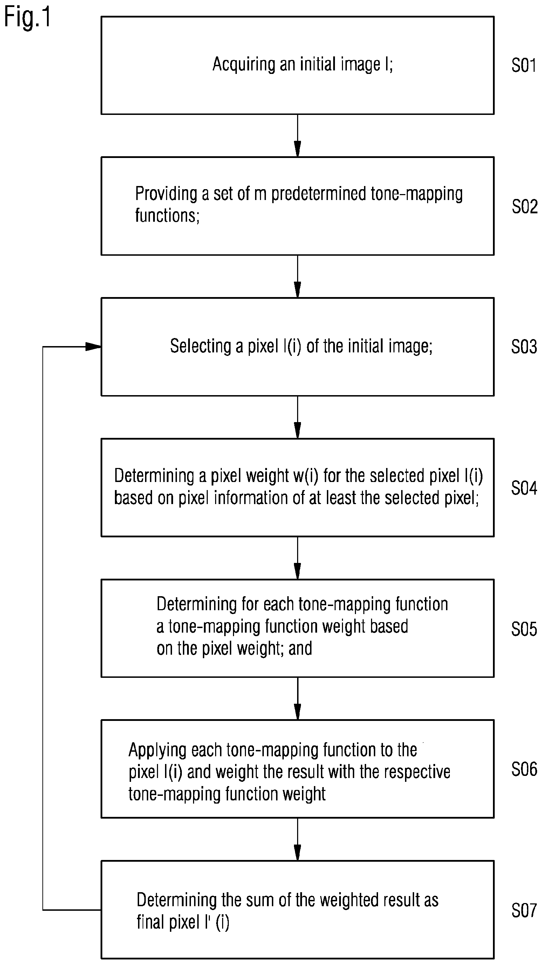

Referring to Figure 1, showing a flow diagram of the method for image processing, in particular for tone mapping.

In step S01 an initial image $I$ is acquired for example by an image sensor of a camera device or a mobile terminal comprising a camera.

In step S02, a set of m predetermined tone-mapping functions is provided. Therein, the number of predetermined tone-mapping functions is equal to or larger than 2. In particular, m is selected to be equal to or larger than 2 and smaller than or equal to 20 ($2 \leq m \leq 20$) and more preferably, smaller than or equal to 10 ($2 \leq m \leq 10$). More preferably, the number of predetermined tone-mapping functions is equal to or larger than 2 and equal to or smaller than the number of nodes of the weight grid as described in more detail below.

In step S03, a pixel $I(i)$ of the initial image is selected.

In step S04, a pixel weight $w(i)$ for the selected pixel $I(i)$ is determined based on pixel information of at least the selected pixel. Therein, the pixel information might include color information and/or luminance. For example, when using the Lab color space, the pixel information might encompass the L-channel, the a-channel or the b-channel or a combination thereof. More preferably, the pixel weight $w(i)$ is determined on the basis of the luminance as described in more detail below. Therein, preferably, a weight grid is calculated using the pixel information of the selected pixel, wherein the weight grid is used for calculation of the pixel weight $w(i)$ as described below.

In step S05, for each tone-mapping function a tone-mapping function weight is determined based on the pixel weight.

In step S06, each tone-mapping function is applied to the selected pixel $I(i)$ and weighting the result with the respective tone-mapping function weight. Thus, first a tone-mapped pixel $I_{LUT_k}(i)$ is determined for each tone-mapping function of the set of predetermined tone-mapping functions with $k = 1, ...,m$. Thus, m results of the tone-mapped selected pixel are acquired. Afterwards, each tone-mapped pixel $I_{LUT_k}(i)$ is then weighted by the respective tone-mapping function weight $w_k(i)$ by multiplying $I_{LUT_k}(i) \times w_k(i)$ to acquire a weighted tone-mapped pixel $\tilde{I}_k(i)$.

In step S07, the sum of the weighted result is determined as final pixel $I'(i)$ by $\sum_{k=1,...,m} \tilde{I}_k(i)$.

Hence, a set of a certain number m of predetermined tone-mapping functions is used. It is not necessary to specifically implement or tune the respective tone-mapping functions individually for each pixel or a group of pixels. Thus, the number of parameters necessary for applying the tone-mapping is reduced, improving the required bandwidth without loss of image quality or degradation of the appearance of the final image.

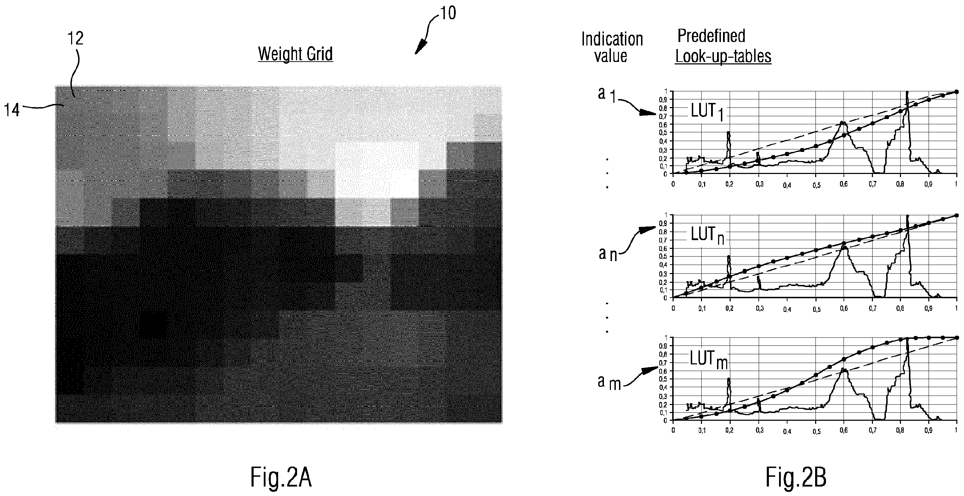

Referring to Figure 2A, showing a weight grid 10 with a plurality of grid nodes 12, wherein for each pixel $I(i)$ a weight can be assigned according to its position in the weight grid 10. For example, pixel 14 shown in Figure 2A is assigned to the grid node 12 in the left upper corner. Thus, the pixel weight of the exemplified pixel 14 might be provided by the grid node 12 or can be calculated on the basis of a node value assigned to the respective grid node 12.

Therein, the weight grid 10 can be calculated by interpolation based on pixel information in the area covered by the respective weight grid node 12 or by the pixel information of the pixels assigned to the respective grid node 12. Interpolation can be done by averaging the pixel information and using this average as the pixel weight for all pixels assigned to the respective grid node 12. Therein, the pixel information relates to the colour channel information and/or the luminance. For example, when using the Lab colour space, the weight grid 10 is determined on the basis of one or more of the L-channel, a-channel, or/and the b-channel. Other possibilities than averaging the pixel information to calculate the weight grid 10 could be implemented and might comprise for example machine learning algorithms, and the like. However, the present invention is not limited to a specific way to determine the weight grid 10. The determination (construction, creating) of the weight grid 10 could be done both in the hardware and software, i.e. implemented as learning based algorithms in the software.

Further, the pixel weight can be obtained by interpolation on the basis of the values assigned to the neighbouring nodes and/or the pixel information of neighbouring pixels of the selected pixel. Therein, interpolation can be done in various ways such as by using a bilinear, bicubic or even more advanced interpolation algorithms such as bilateral interpolation algorithms. Depending on the employed interpolation method, additional information may be used to support the per pixel weight grid interpolation. For instance, for bilateral interpolation, a downscaled (i.e. low-resolution) representation of the input image might be used for better guidance during the interpolation.

Further, the number of grid nodes 12 can be selected and is in the present example selected to be a grid with 12 x 16 grid nodes 12. Selection of the number of nodes 12 can be done by a present number being fixed for several initial images, on the basis of the initial image, for example related to the contrast change in the image, or might be set by the user. Therein, for a large number of nodes 12, the present method applies a local adaption of the respective area of the initial image, while with a low number of nodes 12 a global adaption is applied. To each grid node 12 a grid node value preferably between [0,1] might be assigned. Thus, upon selecting a certain pixel I(i) of the initial image I indicated by the pixel index i, a pixel weight w(i) can be determined based on the weight grid 10, wherein the weight grid 10 provides a weight for the selected pixel according to the pixel information of at least the selected pixel and preferably by the pixels belonging to the same grid node 12.

Referring to Figure 2B, a set of m predetermined tone-mapping functions are provided preferably implemented as look-up tables (LUT). Therein, according to Figure 2B, the respective tone-mapping functions are indicated by $LUT_1$ to $LUT_m$. The number of predetermined tone-mapping functions is preset and at least larger than 2. More preferably, the number of predetermined tone-mapping functions is between 2 and 20 and more preferably between 2 and 10. Most preferably, the number of preset tone-mapping functions is larger than 2 and less than or equal to the number of nodes 12 of the weight grid 10. Therein, each tone-mapping function is associated with an indication value $a_1$ to $a_m$ providing an association information between the respective tone-mapping functions and the respective weight values of the weight grid 10. If the values of the weight grid 10 are limited to [0,1], also the indication values are limited to these values. In particular, the indication value is related to a luminance value. Therein, the indication value might be distributed between a minimum indication value and a maximum indication value, wherein the minimum indication value and/or the maximum indication value is selected according to one of:

- A minimum luminance value or maximum luminance value of the initial image;
- An absolute minimum luminance value usually indicated by a value zero or an absolute maximum luminance value usually indicated by a value 1; or

- A preset minimum luminance value or a preset maximum luminance value.

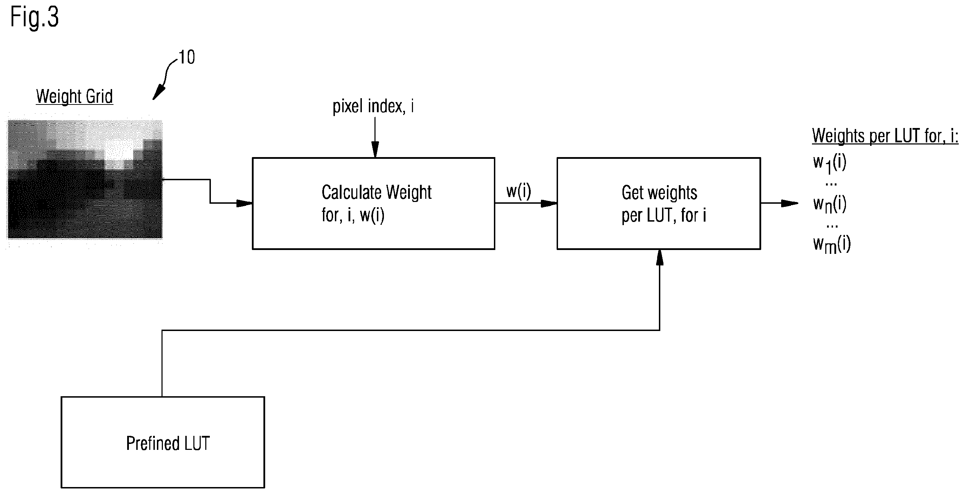

Referring to figure 3, according to step S05, for each tone-mapping function a respective tone-mapping function weight $w_1(i)$ to $w_m(i)$ is determined. Starting with the weight grid 10, a pixel weight $w(i)$ for the selected pixel I(i) is calculated. Afterwards, on the basis of the pixel weight $w(i)$ the individual tone-mapping function weights are calculated for each of the tone-mapping functions The algorithm starts by calculating the weight for the given pixel index, i, for example by interpolating the relevant weight grid nodes 12. This interpolation can be done in various ways such as by using a bilinear, bicubic or even more advanced interpolation algorithms such as bilateral interpolation algorithms.

For a given pixel index with the calculated pixel weight $w(i)$ and the nodes information, tone-mapping function weights per LUT are calculated, i.e. $w_1(i)$, ..., $w_n(i)$, ..., $w_m(i)$. The indication value carries the association of each LUT to the interpolated weight for the image index, i. Each tone-mapping function weight can then be calculated using any interpolation algorithm using any distance information such as absolute distance, squared distance, or any combination of such. The interpolation can also be performed between the nearest selected (2 or few) nodes 12. For example, for $LUT_k$ and for image index i, the weight, $w_k(i)$, can be calculated by using a squared distance based as follows:

$$w_k(i) = \frac{\sum_{k=1:m}(w(i)-a_k)^2}{(w(i)-a_k)^2},$$

where $a_k$ is the indication value for each LUT.

In order to make sure that $w_1(i)$, ..., $w_m(i)$, ..., $w_n(i)$ are between [0,1], the weights can be further normalized by:

$$w_k(i) = \frac{w_k(i)}{\sum_{k=1:n} w_k(i)}$$

The calculated tone-mapping function weights are then passed to the next step and used in the fusion of the outputs of the LUTs.

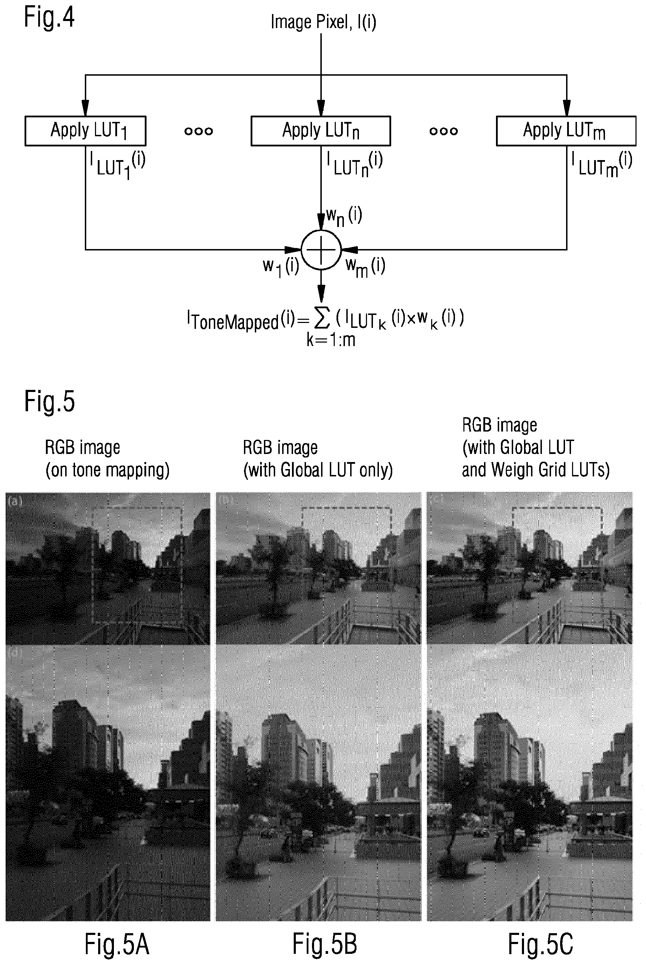

Referring to Figure 4, showing application of the LUTs and calculate a respectively tone-mapped pixel. In this step, first each of the LUTs is applied to the selected image pixel, $I(i)$, to determine the outputs, $I_{LUT_1}(i)$, ..., $I_{LUT_n}(i)$, ..., $I_{LUT_m}(i)$, . Then, by using the tone-mapping function weights, $w_1(i)$, ..., $w_n(i)$, ..., $w_m(i)$ , calculated before, the final tone-mapped pixel, $I_{ToneMapped}(i)$ (or $I'(i)$) is determined by the weighted sum over all tone-mapped selected pixels $I_{LUT_1}(i)$, ..., $I_{LUT_n}(i)$, ..., $I_{LUT_m}(i)$ being weighted by the respective tone-mapping function weights $w_1(i)$, ..., $w_n(i)$, ..., $w_m(i)$. In other terms

$$I_{\text{ToneMapped}}(i) = \sum_{k=1:m} I_{LUT_k}(i) \times w_k(i).$$

These steps are repeated for each pixel of the initial image in order to form the final image being properly tone-mapped.

The present invention provides an efficient and effective local tone-mapping method (both brightness and contrast enhancement). Since this invention does not require any line buffers, it is possible to be implemented efficiently by hardware. The amount of parameter sets is not as large as other grid-based tone-mapping algorithms typically used in the industry. Therefore, it requires smaller bandwidth. Further, the method is fully scalable between local and global operations. When the number m of predetermined tone-mapping functions is reduced and/or the provided LUTs get more alike (like each other), the algorithm starts operating more in global manner. When the LUTs differ from each other and/or the number m is increased, the process becomes more locally oriented.

Referring to Figure 5, providing an example generated with the present invention. Especially in high-dynamic range (HDR) scenes, in addition to the global operations, the local tone-mapping and contrast optimization operations are crucial to generate pleasing images. In Fig. 5, an HDR image processed without tone-mapping (Fig. 5A), with only global LUT (Fig. 5B) and with both global and local operations (done by the method of the present invention) (Fig. 5C). As seen from the rightmost column, the local operations are especially responsible for bringing the local details (see the contrast in the clouds in the sky, in the trees and buildings). These local details cannot be enhanced by using global operations.

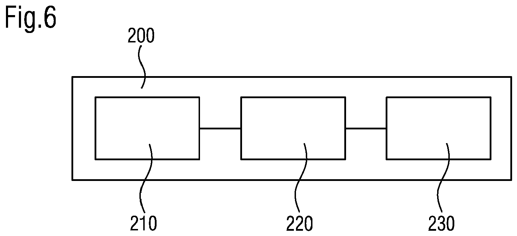

Referring to Figure 6, showing a device such as a terminal device 200 including a camera sensor or image sensor 220 which is connected to a processor 240. Further, the processor 240 is connected to a memory storage 260. The memory storage 260 might store instructions to be performed by the processor 240 to transform the raw image data captured by the image sensor 220 and providing the final image to a user of the terminal device 200. Therein, the processor 240 and memory 260 can be implemented as dedicated image processor implementing the ISP in hardware or can implement the ISP in software stored in the storage memory 260 processed by the processor 240.

**Claims**

1. Method for image processing, in particular tone-mapping, comprising:

   a) Acquiring an initial image *I*;
   b) Providing a set of m predetermined tone-mapping functions;
   c) Selecting a pixel *I(i)* of the initial image;
   d) Determining a pixel weight *w(i)* for the selected pixel *I(i)* based on pixel information of the selected pixel;
   e) Determining a tone-mapping function weight for each tone-mapping function based on the pixel weight;
   f) Applying each tone-mapping function to the selected pixel *I(i)* and weighting the result with the respective tone-mapping function weight; and
   g) Determining the sum of the weighted result as a final pixel *I'(i)*.

2. Method according to claim 1, wherein the steps c) to g) are repeated for each pixel of the initial image.

3. Method according to claims 1 or 2, wherein the tone-mapping functions are implemented as look-up table, LUT.

4. Method according to any of claims 1 to 3, wherein the pixel weight is determined based on pixel information of the selected pixel and a plurality of adjacent pixels being adjacent to the selected pixel.

5. Method according to any of claims 1 to 4, wherein the pixel weight is based on the luminance as pixel information.

6. Method according to any of claims 1 to 5, wherein each tone-mapping function is associated with an indication value, wherein preferably the indication value is a luminance value.

7. Method according to claim 6, wherein the indication value is distributed between a minimum indication value and a maximum indication value, wherein preferably the minimum indication value and/or the maximum indication value is selected according to one of:

   - A minimum luminance value or maximum luminance value of the initial image;
   - An absolute minimum luminance value or an absolute maximum luminance value; or
   - A preset minimum luminance value or a preset maximum luminance value.

8. Method according to claims 6 or 7, wherein the tone-mapping function weight is calculated on the basis of the difference between the indication value and the pixel weight.

9. Method according to any of claims 1 to 8, wherein the tone-mapping function weights $w_k$, k=1,..,m, are calculated according to

$$W_k(i) = \frac{\sum_{k=1:m}(w(i)-a_k)^2}{(w(i)-a_k)^2},$$

wherein w(i) denotes the pixel weight and $a_k$ denotes the indication value.

10. Method according to any of claims 1 to 9, wherein the tone-mapping function weights are normalized, preferably by

$$W_k(i) = \frac{w_k(i)}{\sum_{k=1:m}w_k(i)}.$$

11. Device comprising an image sensor and a processor, wherein the processor is configured to perform the steps of the method according to claims 1 to 10.

12. A computer program comprising instructions which, when the program is executed by a computing device, cause the computing device to carry out the steps of the method according to any of claims 1 to 10.

Fig.1

```
┌─────────────────────────────────────────┐
│                                         │
│     Acquiring an initial image I;       │    S01
│                                         │
└─────────────────────────────────────────┘
                    │
                    ▼
┌─────────────────────────────────────────┐
│                                         │
│  Providing a set of m predetermined     │    S02
│  tone-mapping functions;                │
│                                         │
└─────────────────────────────────────────┘
                    │
                    ▼
┌─────────────────────────────────────────┐
│                                         │
│  Selecting a pixel I(i) of the initial  │    S03
│  image;                                 │
│                                         │
└─────────────────────────────────────────┘
                    │
                    ▼
┌─────────────────────────────────────────┐
│  Determining a pixel weight w(i) for    │
│  the selected pixel I(i)                │    S04
│  based on pixel information of at        │
│  least the selected pixel;               │
└─────────────────────────────────────────┘
                    │
                    ▼
┌─────────────────────────────────────────┐
│  Determining for each tone-mapping      │
│  function                               │
│  a tone-mapping function weight based    │    S05
│  on the pixel weight; and               │
└─────────────────────────────────────────┘
                    │
                    ▼
┌─────────────────────────────────────────┐
│  Applying each tone-mapping function     │
│  to the                                 │    S06
│  pixel I(i) and weight the result with   │
│  the respective                          │
│  tone-mapping function weight           │
└─────────────────────────────────────────┘
                    │
                    ▼
┌─────────────────────────────────────────┐
│  Determining the sum of the weighted     │
│  result as                              │    S07
│  final pixel I' (i)                     │
└─────────────────────────────────────────┘
```

Fig.2A

Fig.2B

EP 4 068 196 A1

Fig.3

Weight Grid

~10

pixel index, i

Calculate Weight
for, i, w(i)

w(i)

Get weights
per LUT, for i

Weights per LUT for, i:
$w_1(i)$
...
$w_n(i)$
...
$w_m(i)$

Prefined LUT

EP 4 068 196 A1

Fig.4

Image Pixel, I(i)

| Apply LUT$_1$ | ooo | Apply LUT$_n$ | ooo | Apply LUT$_m$ |

$^I$LUT$_1$$^{(i)}$     $^I$LUT$_n$$^{(i)}$     $^I$LUT$_m$$^{(i)}$

$w_n(i)$

$w_1(i)$ ⊕ $w_m(i)$

$$^I\text{ToneMapped}(i) = \sum_{k=1:m} (\,^I\text{LUT}_k\,(i) \times w_k(i)\,)$$

Fig.5

RGB image
(on tone mapping)

RGB image
(with Global LUT only)

RGB image
(with Global LUT
and Weigh Grid LUTs)

Fig.5A        Fig.5B        Fig.5C

Fig.6

200

210          220          230

Europäisches
Patentamt

European
Patent Office

Office européen
des brevets

# EUROPEAN SEARCH REPORT

Application Number

EP 21 16 6005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/360171 A1 (TAO LI [US] ET AL) 8 December 2016 (2016-12-08) * paragraphs [0051] - [0061], [0064] * * paragraph [0119] * * figure 2 * | 1-12 | INV. G06T5/00 |
| X | SOHSUKE SHIMOYAMA ET AL: "Local adaptive tone mapping with composite multiple gamma functions", IMAGE PROCESSING (ICIP), 2009 16TH IEEE INTERNATIONAL CONFERENCE ON, IEEE, PISCATAWAY, NJ, USA, 7 November 2009 (2009-11-07), pages 3153-3156, XP031629082, ISBN: 978-1-4244-5653-6 * sections 1 and 2.1.1; figures 1-3 * | 1-12 | |
| X | US 2015/221280 A1 (VAN DER VLEUTEN RENATUS JOSEPHUS [NL]) 6 August 2015 (2015-08-06) * paragraph [0030]; figures 7a-7c * * paragraph [0091] * | 1-12 | TECHNICAL FIELDS SEARCHED (IPC) G06T |

The present search report has been drawn up for all claims

| Place of search | Date of completion of the search | Examiner |
|---|---|---|
| Munich | 8 September 2021 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 16 6005

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2021

| Patent document cited in search report | | Publication date | Patent family member(s) | | Publication date |
|---|---|---|---|---|---|
| US 2016360171 | A1 | 08-12-2016 | CN | 108476312 A | 31-08-2018 |
| | | | CN | 108496356 A | 04-09-2018 |
| | | | EP | 3391646 A1 | 24-10-2018 |
| | | | EP | 3398167 A1 | 07-11-2018 |
| | | | KR | 20180088740 A | 06-08-2018 |
| | | | KR | 20180089899 A | 09-08-2018 |
| | | | US | 2016360171 A1 | 08-12-2016 |
| | | | US | 2016360172 A1 | 08-12-2016 |
| | | | US | 2016360173 A1 | 08-12-2016 |
| | | | US | 2016360174 A1 | 08-12-2016 |
| | | | WO | 2017115979 A1 | 06-07-2017 |
| | | | WO | 2017116093 A1 | 06-07-2017 |
| US 2015221280 | A1 | 06-08-2015 | BR | 112014027815 A2 | 27-06-2017 |
| | | | CN | 104364820 A | 18-02-2015 |
| | | | EP | 2836983 A1 | 18-02-2015 |
| | | | ES | 2641371 T3 | 08-11-2017 |
| | | | JP | 5911643 B2 | 27-04-2016 |
| | | | JP | 2015529890 A | 08-10-2015 |
| | | | KR | 20150067089 A | 17-06-2015 |
| | | | MX | 338258 B | 11-04-2016 |
| | | | PL | 2836983 T3 | 31-01-2018 |
| | | | RU | 2014143972 A | 27-11-2016 |
| | | | US | 2015221280 A1 | 06-08-2015 |
| | | | WO | 2014056679 A1 | 17-04-2014 |
| | | | ZA | 201407903 B | 27-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. PARIS ; S. W. HASINOFF ; J. KAUTZ.** *Local Laplacian Filters: ''Edge-aware Image Processing with a Laplacian Pyramid*